# FASCICULE DE BREVET EUROPEEN

(11) **EP 2 142 406 B1**
(45) Date de publication et mention de la délivrance du brevet: **18.08.2010**
(21) Numéro de dépôt: 08788080.3
(22) Date de dépôt: 28.03.2008
(51) Int. Cl.: B60W 50/02, B60T 17/22

(54) **PROCEDE DE DIAGNOSTIC DE CONTACTEURS DE PEDALE DE FREIN**
VERFAHREN ZUR DIAGNOSTIZIERUNG VON BREMSPEDALKONTAKTOREN
METHOD FOR DIAGNOSING BRAKE PEDAL CONTACTORS

(30) Priorité: 06.04.2007 FR 0754381
(43) Date de publication de la demande: 13.01.2010
(73) Titulaire: Renault SAS, 92100 Boulogne Billancourt (FR)
(72) Inventeur: CUNY, Pierre Yves, F-91800 Brunoy (FR); BIEMONT, Anne, F-91630 Avrainville (FR); GEORGE, Stéphane, F-91300 Massy (FR)
(86) Numéro de dépôt international: PCT/FR2008/050554
(87) Numéro de publication internationale: WO 2008/135698

(56) Documents cités:
- EP-A- 0 428 338
- EP-A- 1 275 885
- DE-A1- 19 858 373
- US-A1- 2005 216 134

## Description

La présente invention concerne un procédé de diagnostic de contacteurs. Elle concerne en particulier un procédé de diagnostic du fonctionnement de contacteurs utilisés pour déterminer la position d'une pédale de frein d'un véhicule automobile.

La publication EP-0 428 338 décrit un procédé de pilotage d'un régulateur de vitesse d'un véhicule automobile. Durant la mise en oeuvre de ce procédé, on détecte l'occurrence d'une diminution de la vitesse du véhicule au-delà d'un seuil prédéterminé. Si cette diminution a lieu dans un laps de temps prédéterminé sans que les contacteurs de freins n'indiquent de pression sur la pédale de frein de la part du conducteur, les contacteurs sont considérés comme défaillants.

Un problème avec ce type de diagnostic réside dans le fait que la détection de la défaillance des contacteurs de frein n'est effectuée que si l'on se trouve dans des conditions déterminées. Ainsi il faut par exemple que la vitesse du véhicule ait diminué de 30 Km/h en moins de deux seconde pour qu'une défaillance soit détectée.

Or, les contacteurs de frein peuvent avoir un dysfonctionnement à n'importe quel moment de la vie du véhicule et l'on souhaite connaître leur état de fonctionnement dans d'autres circonstances que celles définies dans la publication EP-0 428 338.

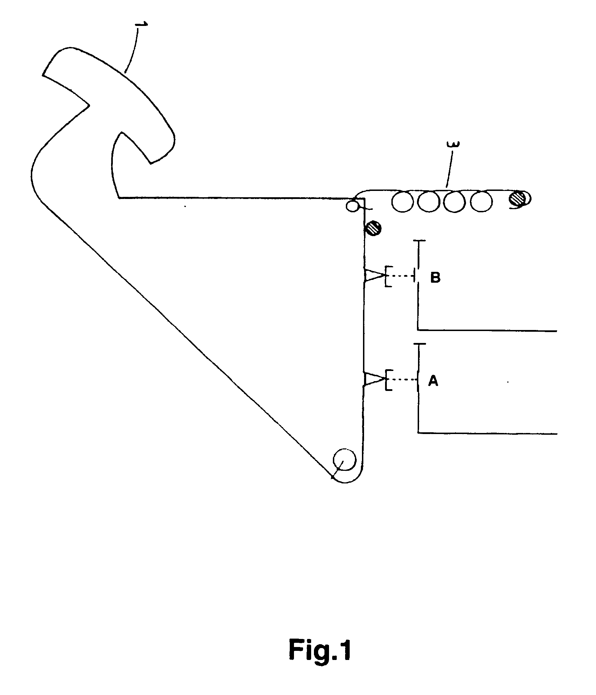

La figure 1 est une vue schématique d'une pédale de frein 1 équipée de deux contacteurs A et B permettant de déterminer la position de la pédale de frein 1. La pédale de frein 1 est également équipée d'un ressort 3 de rappel qui la maintient dans une position de repos lorsqu'elle n'est pas actionnée par un utilisateur.

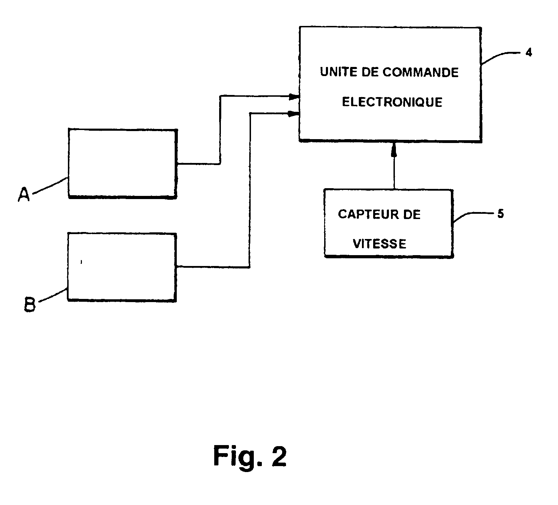

Comme cela est visible sur la figure 2, les informations concernant la position de la pédale de frein sont transmises à une unité de commande électronique (U.C.E.) qui les traite afin de déterminer la position de la pédale. La cohérence entre ces signaux permet également à l'U.C.E. de déterminer l'état de fonctionnement des contacteurs A et B.

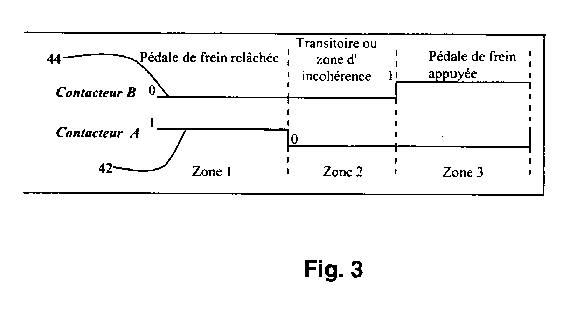

Un exemple des signaux fournis par les contacteurs A et B à l'unité électronique de commande est représenté à la figure 3. En fonction des signaux logiques 42 et 44 émis par les contacteurs A et B, l'unité électronique de commande interprète l'état dans lequel se trouve la pédale de frein. Lorsque le contacteur A fournit un état logique haut et que le contacteur B fournit un état logique bas (Zone 1), l'U.C.E interprète que la pédale de frein est dans un état dit relâché. Lorsque le contacteur A fournit un état logique bas et que le contacteur B fournit un état logique haut (Zone 3), L'U.C.E. interprète que la pédale de frein est dans un état dit appuyé.

Actuellement le diagnostic des contacteurs est basé sur la cohérence des signaux qu'ils fournissent à l'U.C.E. Ainsi lorsque les signaux (42,44) en provenance des deux contacteurs fournissent un état logique bas (Zone 2), l'U.C.E interprète ces signaux comme signifiant que la pédale de frein 1 est à la fois appuyée et relâchée. Cette situation se produit lors d'une phase dite transitoire, lorsqu'un utilisateur appuie sur la pédale de frein, au moment ou les contacteurs changent de position car ils ne commutent pas exactement au même instant. Il s'agit d'un état dit incohérent et, cette incohérence peut être interprétée comme une défaillance d'un des contacteurs lorsqu'elle dure trop longtemps. Toutefois, un conducteur peut également entrer et rester dans cette zone 2, appelée zone d'incohérence, lors d'un léger posé de pied sur la pédale de frein. Ceci peut également se produire lorsque le véhicule est à l'arrêt (par exemple à un feu rouge) ou en roulage lorsque le conducteur pré-positionne son pied sur la pédale de frein par anticipation d'un freinage. Dans tous ces cas, l'un des contacteurs A et B n'est pas forcément défaillant.

Il est donc important que l'U.C.E fasse la différence entre un état transitoire des contacteurs A et B et une véritable défaillance car dans ce cas il faut indiquer au réparateur et/ou au conducteur qu'une réparation est nécessaire.

Afin de résoudre ce problème, il a été proposé que l'U.C.E. lance une temporisation lors de l'entrée dans la zone d'incohérence de la figure 3. Ceci permet de prendre en compte l'état transitoire et d'éviter de diagnostiquer une fausse défaillance des contacteurs.

Toutefois les inventeurs ont constaté que dans certains cas, la mise en oeuvre de ce type de diagnostic aboutit encore à un trop grand nombre de cas de détection de fausses défaillances ou de non détection de défaillance.

En outre, les diagnostics de l'art antérieur peuvent dans certains cas considérer les contacteurs comme fonctionnant normalement alors qu'ils sont défaillants. Par exemple, lors d'un circuit ouvert sur le contacteur A, les contacteurs sont à nouveau considérés comme fonctionnant dès lors que le conducteur freine. On passe alors de la zone d'incohérence à zone de freinage. Or le contacteur A est toujours défaillant.

Un but de l'invention est de résoudre les problèmes de l'art antérieur en fournissant un procédé de diagnostic de contacteurs de pédale de frein amélioré.

L'invention propose donc un procédé de diagnostic de contacteurs de pédale de frein d'un véhicule automobile comportant une unité de commande électronique (U.C.E), les contacteurs étant reliés à l'U.C.E et lui fournissant des informations sur la position de la pédale (1) **caractérisé en ce qu**'il comporte une étape au cours de laquelle l'U.C.E teste les signaux en provenance des contacteurs, si ces signaux indiquent que l'on se trouve dans un état de fonctionnement dit incohérent, dans lequel la pédale de frein est considérée par l'U.C.E. comme étant à la fois appuyée et relâchée, l'U.C.E. lance une temporisation, la durée de la temporisation étant fonction de la vitesse du véhicule.

Grâce au procédé selon l'invention, on prend en compte la vitesse de déplacement du véhicule afin de diagnostiquer l'état de fonctionnement des contacteurs. Ainsi, lorsque la vitesse du véhicule est faible, on considère que le conducteur peut rester dans un état transitoire, en appuyant légèrement sur la pédale de frein, par exemple parce qu'il est à un feu rouge, durant une longue période de temps, ceci sans qu'une défaillance des contacteurs de frein ne soit signalée. Cette caractéristique permet de réduire les cas de fausse détection de défaillances.

Par contre, au delà d'une certaine vitesse du véhicule, on autorise le passage dans la zone d'incohérence durant une période de temps plus courte, le temps de détection de la défaillance des contacteurs s'en trouve diminué. Ainsi, on diminue les cas de non détection des défaillances des contacteurs.

Selon d'autres caractéristiques du procédé prises séparément ou en combinaison :
■ l'U.C.E. compare de la vitesse du véhicule à une valeur de seuil, si la vitesse est supérieure au seuil, la durée de la temporisation est égale à une première valeur sinon la durée de la temporisation est égale à une seconde valeur, la première valeur étant inférieure à la seconde valeur ;
■ à la fin de la temporisation ayant la première valeur, si l'U.C.E. détecte que les signaux en provenance des contacteurs indiquent que la pédale est encore dans l'état dit incohérent l'U.C.E. déclare un des contacteurs comme étant défaillant ;
■ à la fin de la temporisation ayant la deuxième valeur, si l'U.C.E. détecte que les signaux en provenance des contacteurs indiquent que la pédale est encore dans l'état dit incohérent l'U.C.E. déclare un des contacteurs (A, B) comme étant défaillant ;
■ le procédé comporte une étape au cours de laquelle l'U.C.E vérifie que les signaux en provenance des contacteurs indiquent que la pédale est passée d'un état dit incohérent à un état dit appuyé ou d'un état dit incohérent à un état dit relâché ;
■ si les signaux en provenance des contacteurs indiquent à l'U.C.E. que la pédale reste dans l'état appuyé ou dans l'état relâché durant une durée prédéterminée, l'U.C.E. vérifie ensuite que la pédale est passée d'un état dit appuyé à un état dit relâché ou d'un état dit relâché à un état dit appuyé;
■ si les signaux en provenance des contacteurs indiquent à l'U.C.E. que la pédale reste dans l'état dit relâché ou dans l'état dit appuyé durant une durée prédéterminée, l'U.C.E. déclare les contacteurs comme non défaillants.

D'autres caractéristiques et avantages de l'invention apparaîtront à la lecture de la description détaillée qui va suivre pour la compréhension de laquelle on se reportera aux dessins en annexe, parmi lesquels :
- la figure 1, déjà décrite représente de manière schématique une pédale de frein d'un véhicule automobile,
- la figure 2, déjà décrite est une vue schématique d'une unité de commande électronique d'un véhicule automobile reliée à différents capteurs,
- la figure 3, déjà décrite est un chronogramme montrant les différents états logiques des signaux en provenance des contacteurs,
- la figure 4 est un ordinogramme de la première partie du procédé selon l'invention ;
- la figure 5 est un ordinogramme de la seconde partie du procédé selon l'invention ;

On se réfère à présent à la figure 2. En plus des informations en provenance des contacteurs, l'U.C.E. reçoit également l'information "vitesse véhicule" grâce à un capteur de vitesse 5.

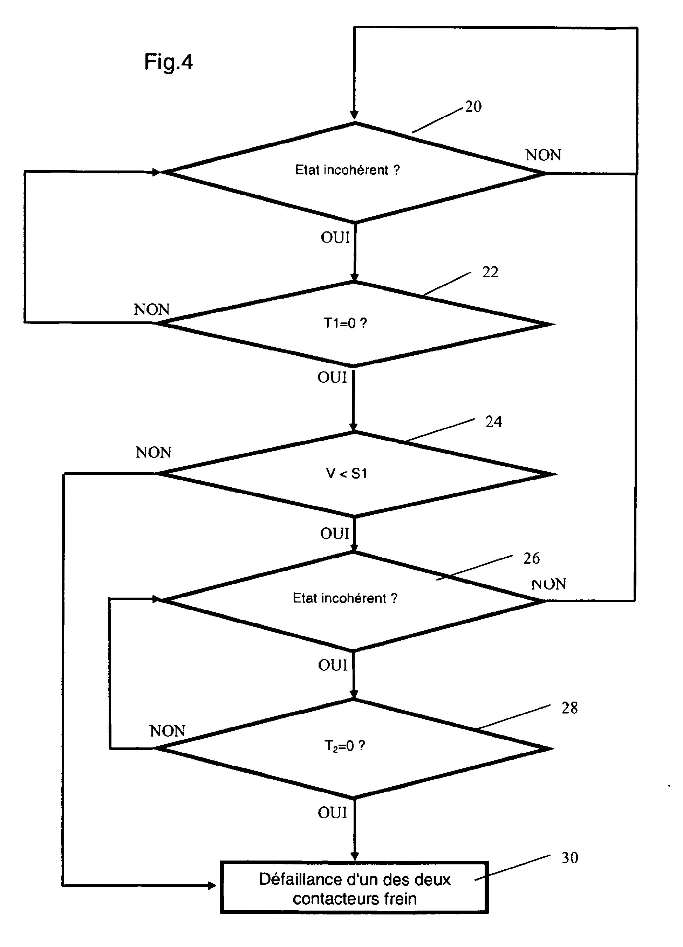

Le procédé de diagnostic des contacteurs va maintenant être décrit en référence à la figure 4. A l'étape 20 l'U.C.E. teste grâce aux signaux en provenance des contacteurs A et B que l'on se trouve dans un état incohérent (zone 2 de la figure 3). Si tel n'est pas le cas le test de l'étape 20 est effectué de nouveau. Si on est bien dans l'état d'incohérence l'U.C.E lance une temporisation T1 (étape non représentée). La temporisation peut par exemple durer une dizaine de secondes. A l'étape 22, l'U.C.E. teste si la temporisation T1 est écoulée. Si tel n'est pas le cas, le test prévu à l'étape 20 est de nouveau effectué. Si la temporisation T1 est écoulée, à l'étape 24 l'U.C.E. compare la vitesse du véhicule à un seuil S1 prédéterminé. Avantageusement ce seuil est de l'ordre d'une dizaine de km/h. Si la vitesse V du véhicule est supérieure au seuil S1, un des deux contacteurs est déclaré en défaut à l'étape 30. Dans le cas contraire, l'U.C.E vérifie de nouveau à l'étape 26 si les signaux en provenance des contacteurs A et B indiquent toujours que l'on se trouve dans l'état incohérent. Si tel n'est pas le cas, le test de l'étape 20 est effectué. Si on est encore dans l'état incohérent, l'U.C.E. lance une seconde temporisation T2 (étape non représentée). La temporisation T2 peut par exemple durer une dizaine de minutes. A l'étape 28, l'UCE teste si la temporisation T2 est écoulée. Si tel n'est pas le cas, le test de 26 est effectué. Si la temporisation T2 est écoulée, l'un des deux contacteurs est déclaré en défaut à l'étape 30.

La durée de la temporisation avant le signalement de la défaillance est donc fonction de la vitesse de déplacement du véhicule. En effet, La temporisation totale vaut T1 si la vitesse est importante et T4=T1+T2 si le véhicule se déplace lentement.

Selon l'invention, la levée d'un défaut ne tient pas seulement compte de l'état des contacteurs mais aussi de la situation dans laquelle se trouve le véhicule. Cette caractéristique permet d'éviter de lever des défauts inutilement.

Après avoir détecté la présence d'une défaillance sur un des contacteurs A et B, il est important de savoir si ce défaut est passager, ou si il est permanent et donc si il nécessite une réparation.

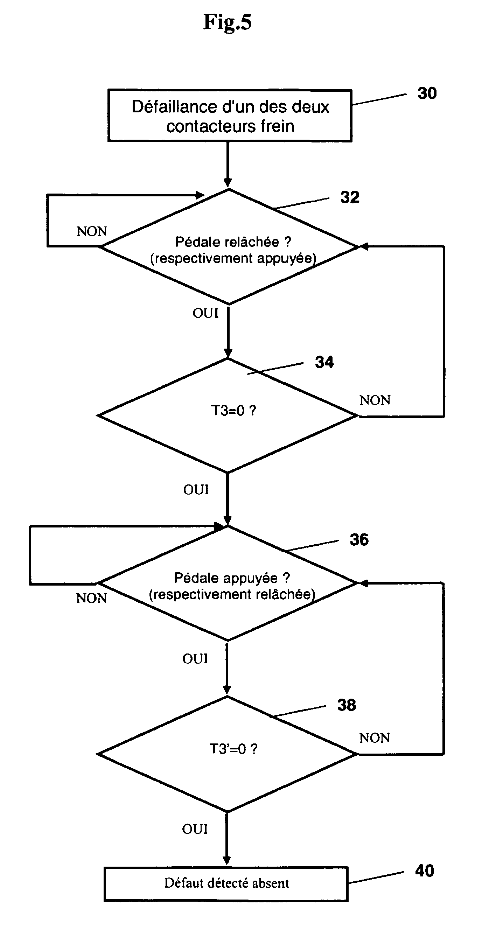

On se reporte à présent à la figure 5. Lorsqu'à la suite de l'étape 30 l'U.C.E. a déterminé que l'un des contacteurs était défaillant, à l'étape 32, l'U.C.E. teste si les signaux en provenance des contacteurs A et B permettent de déterminer si la pédale de frein est dans l'état relâché (respectivement appuyé). Ce test permet de savoir si on a quitté l'état d'incohérence pour un autre état de la figure 3. L'U.C.E effectue le test de l'étape 32. Si on est bien passé de l'état incohérent à un autre état, l'U.C.E. lance une temporisation T3 (étape non représentée). La temporisation T3 dure par exemple 300ms. A l'étape 34, l'U.C.E. teste si la temporisation T3 est écoulée. Si tel n'est pas le cas, l'étape 32 est effectuée. Si la temporisation T3 est écoulée, l'U.C.E. teste si les informations en provenance des contacteurs A et B permettent de déterminer si la pédale de frein a été appuyée (respectivement relâchée). Ce test permet de savoir si on est passé de l'état appuyé de la figure 3 (respectivement relâché) à l'état relâché (respectivement appuyé). Si tel n'est pas le cas, l'étape 36 est effectuée. Si les signaux en provenance des contacteurs A et B indiquent que la pédale de frein est passée de l'état appuyé (respectivement relâché) à l'état relâché (respectivement appuyé), l'U.C.E lance une temporisation T3'. La temporisation T3' dure par exemple 300ms. A l'étape 38, l'U.C.E. teste si la temporisation T3' est écoulée. Si tel n'est pas le cas, l'étape 38 est effectuée. Si la temporisation T3' est écoulée, la défaillance qui avait été détectée précédemment est détectée absente par l'U.C.E à l'étape 40 et les contacteurs sont déclarés comme étant non défaillants.

Grâce à cette vérification de disparition de défaut, le diagnostic des contacteurs selon l'invention est plus fiable que les diagnostics connus. En effet si le contacteur A est défaillant par exemple en circuit ouvert, l'appui sur la pédale de frein provoque le passage de la zone d'incohérence à la zone de freinage. Un procédé de diagnostic classique considérerait donc le contacteur comme de nouveau bon. Par contre, pour que la défaillance disparaisse en appliquant le procédé selon l'invention, il faudrait que l'on passe de la zone de freinage à la zone de pédale relâchée. Or cela n'est pas possible car le contacteur est en circuit ouvert. Ainsi la défaillance du contacteur A restera signalée grâce au procédé selon l'invention.

## Revendications

1. Procédé de diagnostic de contacteurs (A,B) de pédale de frein (1) d'un véhicule automobile comportant une unité de commande électronique (U.C.E), les contacteurs (A,B) étant reliés à l'U.C.E et lui fournissant des informations sur la position de la pédale (1) **caractérisé en ce qu'**il comporte une étape au cours de laquelle l'U.C.E teste les signaux (42,44) en provenance des contacteurs, si ces signaux (42,44) indiquent que l'on se trouve dans un état de fonctionnement dit incohérent, dans lequel la pédale de frein (1) est considérée par l'U.C.E. comme étant à la fois appuyée et relâchée, l'U.C.E. lance une temporisation (T1,T4), la durée de la temporisation étant fonction de la vitesse du véhicule.

2. Procédé selon la revendication précédente **caractérisé en ce qu'**il comporte une étape (24) durant laquelle l'U.C.E. compare de la vitesse (V) du véhicule à une valeur de seuil (S1), si la vitesse (V) est supérieure au seuil (S1), la durée de la temporisation est égale à une première valeur (T1) sinon la durée de la temporisation est égale à une seconde valeur (T4), la première valeur (T1) étant inférieure à la seconde valeur (T4).

3. Procédé selon l'une des revendications précédentes **caractérisé en ce qu'**à la fin de la temporisation (T1) ayant la première valeur, si l'U.C.E. détecte que les signaux (42,44) en provenance des contacteurs (A,B) indiquent que la pédale est encore dans l'état dit incohérent l'U.C.E. déclare un des contacteurs (A,B) comme étant défaillant.

4. Procédé selon la revendication 2 **caractérisé en ce qu'**à la fin de la temporisation (T4) ayant la deuxième valeur, si l'U.C.E. détecte que les signaux en provenance des contacteurs (A,B) indiquent que la pédale est encore dans l'état dit incohérent l'U.C.E. déclare un des contacteurs (A,B) comme étant défaillant.

5. Procédé selon l'une quelconque des revendications 3 ou 4 **caractérisé en ce qu'**il comporte une étape (32) au cours de laquelle l'U.C.E vérifie que les signaux (42,44) en provenance des contacteurs (A,B) indiquent que la pédale (1) est passée d'un état dit incohérent à un état dit appuyé ou d'un état dit incohérent à un état dit relâché.

6. Procédé selon la revendication précédente **caractérisé en ce que** si les signaux (42,44) en provenance des contacteurs (A,B) indiquent à l'U.C.E. que la pédale (1) reste dans l'état appuyé ou dans l'état relâché durant une durée prédéterminée (T3), l'U.C.E. vérifie ensuite que la pédale est passée d'un état dit appuyé à un état dit relâché ou d'un état dit relâché à un état dit appuyé.

7. Procédé selon la revendication précédente **caractérisé en ce que** si les signaux (42,44) en provenance des contacteurs (A,B) indiquent à l'U.C.E. que la pédale (1) reste dans l'état dit relâché ou dans l'état dit appuyé durant une durée prédéterminée (T3'), l'U.C.E. déclare les contacteurs comme non défaillants.

## Claims

1. Diagnostics method for diagnosing contactors (A, B) for the brake pedal (1) of a motor vehicle comprising an electronic control unit (ECU), the contactors (A, B) being connected to the ECU and supplying it with information regarding the position of the pedal (1), **characterized in that** it comprises a step during which the ECU tests the signals (42, 44) coming from the contactors, and if these signals (42, 44) indicate that the current state of operation is a state known as the incoherent state, in which the brake pedal (1) is considered by the ECU to be both depressed and released, the ECU begins a time out (T1, T4), the length of the time out being dependent on the speed of the vehicle.

2. Method according to the preceding claim, **characterized in that** it comprises a step (24) during which the ECU compares the speed (V) of the vehicle against a threshold value (S1) and if the speed (V) is greater than the threshold (S1), the length of the time out is equal to a first value (T1), otherwise the length of the time out is equal to a second value (T4), the first value (T1) being smaller than the second value (T4).

3. Method according to one of the preceding claims, **characterized in that,** at the end of the time out (T1) having the first value, if the ECU detects that the signals (42, 44) coming from the contactors (A, B) are indicating that the pedal is still in the state known as the incoherent state, the ECU declares that one of the contactors (A, B) is defective.

4. Method according to Claim 2, **characterized in that**, at the end of the time out (T4) having the second value, if the ECU detects that the signals coming from the contactors (A, B) are indicating that the pedal is still in the state known as the incoherent state, the ECU declares one of the contactors (A, B) to be defective.

5. Method according to either one of Claims 3 and 4, **characterized in that** it comprises a step (32) during which the ECU checks that the signals (42, 44) coming from the contactors (A, B) are indicating that the pedal (1) has switched from a state known as the incoherent state to a state known as the depressed state or from a state known as the incoherent state to a state known as the released state.

6. Method according to the preceding claim, **characterized in that** if the signals (42, 44) coming from the contactors (A, B) are indicating to the ECU that the pedal (1) is remaining in the depressed state or in the released state for a predetermined length of time (T3), the ECU next checks that the pedal has switched from a state known as the depressed state to a state known as the released state or from a state known as the released state to a state known as the depressed state.

7. Method according to the preceding claim, **characterized in that** if the signals (42, 44) coming from the contactors (A, B) are indicating to the ECU that the pedal (1) is remaining in the state known as the released state or in the state known as the depressed state for a predetermined length of time (T3'), the ECU declares the contactors not to be defective.

## Patentansprüche

1. Verfahren zur Diagnose von Kontaktelementen (A, B) eines Bremspedals (1) eines Kraftfahrzeugs, das eine elektronische Steuereinheit (U.C.E.) aufweist, wobei die Kontaktelemente (A, B) mit der U.C.E. verbunden sind und ihr Informationen über die Stellung des Pedals (1) liefern, **dadurch gekennzeichnet, dass** es einen Schritt aufweist, während dem die U.C.E. die von den Kontaktelementen kommenden Signale (42, 44) testet, wenn diese Signale (42, 44) anzeigen, dass man sich in einem so genannten inkohärenten Betriebszustand befindet, in dem das Bremspedal (1) von der U.C.E, als gleichzeitig gedrückt und losgelassen betrachtet wird, startet die U.C.E. eine Verzögerung (T1, T4), wobei die Dauer der Verzögerung von der Geschwindigkeit des Fahrzeugs abhängt.

2. Verfahren nach dem vorhergehenden Anspruch, **dadurch gekennzeichnet, dass** es einen Schritt (24) aufweist, während dem die U.C.E. die Geschwindigkeit (V) des Fahrzeugs mit einem Schwellwert (S1) vergleicht, wenn die Geschwindigkeit (V) über dem Schwellwert (S1) liegt, ist die Dauer der Verzögerung gleich einem ersten Wert (T1), ansonsten ist die Dauer der Verzögerung gleich einem zweiten Wert (T4), wobei der erste Wert (T1) unter dem zweiten Wert (T4) liegt.

3. Verfahren nach einem der vorhergehenden Ansprüche, **dadurch gekennzeichnet, dass** am Ende der Verzögerung (T1) mit dem ersten Wert, wenn die U.C.E. feststellt, dass die von den Kontaktelementen (A, B) kommenden Signale (42, 44) anzeigen, dass das Pedal noch im so genannten inkohärenten Zustand ist, die U.C.E. eines der Kontaktelemente (A, B) als defekt erklärt.

4. Verfahren nach Anspruch 2, **dadurch gekennzeichnet, dass** am Ende der Verzögerung (T4) mit dem zweiten Wert, wenn die U.C.E. feststellt, dass die von den Kontaktelementen (A, B) kommenden Signale anzeigen, dass das Pedal noch im so genannten inkohärenten Zustand ist, die U.C.E. eines der Kontaktelemente (A, B) als defekt erklärt.

5. Verfahren nach einem der Ansprüche 3 oder 4, **dadurch gekennzeichnet, dass** es einen Schritt (32) aufweist, während dem die U.C.E. prüft, ob die von den Kontaktelementen (A, B) kommenden Signale (42, 44) anzeigen, dass das Pedal (1) von einem so genannten inkohärenten Zustand in einen so genannten gedrückten Zustand oder von einem so genannten inkohärenten Zustand in einen so genannten losgelassenen Zustand übergegangen ist.

6. Verfahren nach dem vorhergehenden Anspruch, **dadurch gekennzeichnet, dass,** wenn die von den Kontaktelementen (A, B) kommenden Signale (42, 44) der U.C.E. anzeigen, dass das Pedal (1) während einer vorbestimmten Dauer (T3) im gedrückten Zustand oder im losgelassenen Zustand bleibt, die U.C.E. anschließend prüft, ob das Pedal von einem so genannten gedrückten Zustand in einen so genannten losgelassenen Zustand oder von einem so genannten losgelassenen Zustand in einen gedrückten Zustand übergegangen ist.

7. Verfahren nach dem vorhergehenden Anspruch, **dadurch gekennzeichnet, dass,** wenn die von den Kontaktelementen (A, B) kommenden Signale (42, 44) der U.C.E. anzeigen, dass das Pedal (1) während einer vorbestimmten Dauer (T3') im so genannten losgelassenen Zustand oder im so genannten gedrückten Zustand bleibt, die U.C.E. die Kontaktelemente als nicht defekt erklärt.
